Europäisches Patentamt

(19) European Patent Office

Office européen des brevets

(11) Publication number: **0 002 600**
**A1**

(12) **EUROPEAN PATENT APPLICATION**

(21) Application number: 78300790.9

(22) Date of filing: 11.12.78

(51) Int. Cl.²: **E 03 C 1/10**
**F 16 K 15/06**

(30) Priority: 13.12.77 US 860061

(43) Date of publication of application:
27.06.79 Bulletin 79/13

(84) Designated contracting states:
BE CH DE FR GB IT NL SE

(71) Applicant: Braukmann, Heinz Werner
5601 Steeles Avenue West
Weston Ontario(CA)

(72) Inventor: Braukmann, Heinz Werner
5601 Steeles Avenue West
Weston Ontario(CA)

(74) Representative: Cook, Anthony John et al,
D. YOUNG & CO. 9 & 10, Staple Inn
London, WC1V 7RD(GB)

(54) **Check valve structure.**

(57) A check valve assembly has a conduit section with an inlet 12 and an outlet 14 on a longitudinal axis thereof, and first and second check valves in the conduit section. The check valves 30-50 respectively have first 32 and second 52 valve stems movable along a common axis inclined to the longitudinal axis, first 40 and second valve seats 60 and co-operating valve plates 42-56 perpendicular to the common axis and mounted on the valve stems. The first check valve is upstream of the second check valve, and the second valve seat has a larger diameter than the first valve seat. The first and second valve seats have portions located between the inlet and the outlet, and the first valve plate has a lift sufficient to enable fluid flowing from the inlet to the outlet, when the valves are open, to flow past the portions of the valve seats in a substantially straight line from the inlet to the outlet. The conduit section has removable means for securing the check valves in position.

FIG.1.

EP 0 002 600 A1

- 1 -

## CHECK VALVE STRUCTURE

This invention relates to double check valve assemblies for the control of fluids, as used for example in back flow preventers for drinking water flowing in a conduit.

Any arrangement of double check valves in a conduit should provide for securement and access for servicing. In a known valve arrangement involving the use of first and second check valves positioned in a straight length of conduit, the valve stem of each check valve is in line with the other to provide a compact assembly, and is also positioned perpendicularly to the longitudinal axis of the conduit. When the check valves open to provide for passage of the fluid in the straight line conduit, the direction of the fluid is substantially changed in the region occupied by the check valves. As a result, there is increased resistance to the flow which requires higher expenditure of energy by a pump to maintain pressure than would be the case if the check valves were absent. Furthermore, it is well known that the higher the resistance coefficient of the system, the greater is the pressure fluctuation during operation of the valves.

The smaller the diameter of the conduit, the greater the difficulty of providing a double check valve assembly of the type described above, because efficient operation of the check valves requires that the lift of the first valve plate should preferably be about 25% of the valve plate diameter. Hence, as the conduit diameter decreases, the valve plate diameter has to decrease to provide the requisite factor. Due to such reduction in size, the problems of manufacturing the check valves are increased.

It is therefore an object of the invention to provide a double check valve structure in a straight line conduit section wherein the flow through the check valves is generally in line with the flow prior to entry into the first check valve. According to the invention, a check valve assembly has a conduit section with an inlet and an outlet on a longitudinal axis thereof, and first and second check valves in the conduit section. The check valves respectively have first and second valve stems movable along a common axis inclined to the longitudinal axis, first and second valve seats, and co-operating valve plates perpendicular to the common axis and mounted on the valve stems. The first check valve is upstream of the second check valve, and the second valve seat has a larger diameter than the first valve seat. The first and second valve seats have portions located between the inlet and the outlet, and the first valve plate has a lift sufficient to enable fluid flowing from the inlet to the outlet, when the valves are open, to flow past the portions of the valve seats in a substantially straight line from the inlet to the outlet. The conduit section has removable means for securing the check valves in position.

The second valve plate may have a depending annular wall engageable with the second valve seat, and the first valve plate may be positioned to move to an open position within the area bounded by the annular wall.

The first valve stem may be slidably mounted in the second valve plate. The first and second valve seats may lie in first and second planes respectively, with the second valve seat lying in a plane downstream of the first valve seat. The first and second valve seats may be located on a removable sleeve in the conduit section.

Embodiments of the invention will now be described, by way of example, with reference to the accompanying drawings, in which:

Figure 1 is a cross sectional view of a check valve assembly according to a first embodiment;

Figure 2 is a similar view of a second embodiment;

Figure 3 is a similar view of a third embodiment; and

Figure 4 is a similar view of a fourth embodiment.

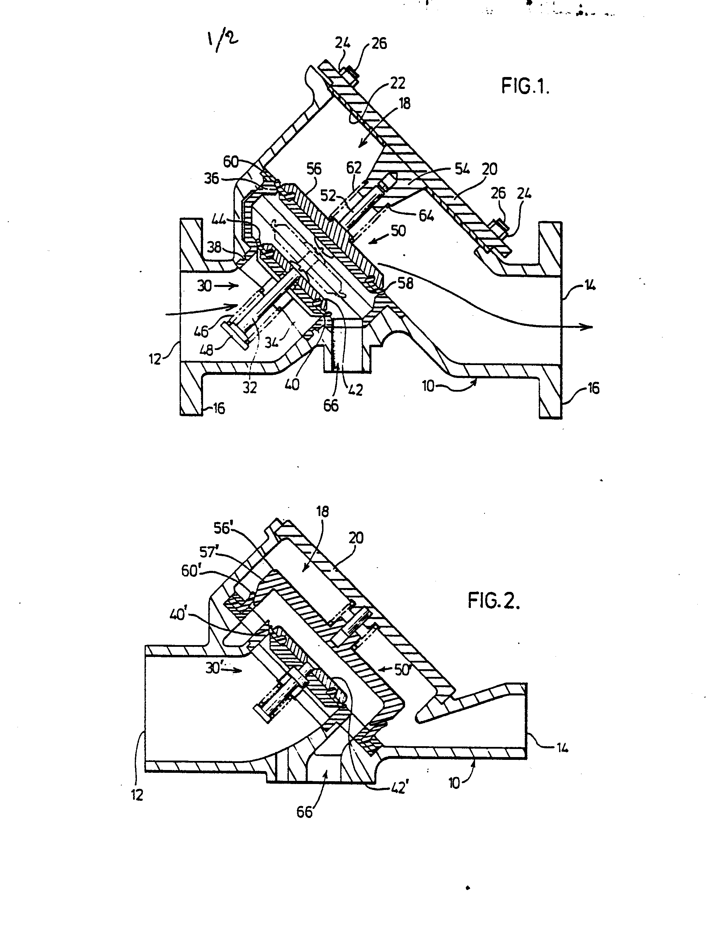

With reference to Figure 1, a check valve assembly includes a conduit section 10, an inlet 12 and an outlet 14 on the longitudinal axis of the conduit section 10. The section 10 may be provided with flanges 16 for connection to a conduit (not shown).

The conduit section 10 has an upper opening 18 closed by removable cover plate 20, which has a gasket 22 and is secured in position by nuts 24 threaded onto bolts 26 fixed in the wall of the conduit section 10 at the edge of the openings 18.

The conduit section 10 contains a first check valve 30 located adjacent the inlet 12. Check valve 30 has a valve stem 32 inclined to the direction of flow through the inlet 12. The valve stem 32 is slidably mounted in the cross arm 34 of a removable sleeve 36 located in the conduit 10 and sealed thereto by seal 38. Sleeve 36 is shaped to provide a valve seat 40. The valve stem 32 carries a perpendicularly disposed plate 42 having a resilient insert 44 which seals with the valve seat 40 due to the action of a valve spring 46 bearing against the stepped end 48 of the valve stem 32. The other end of the spring 46 bears against the cross art 34. The strength of the spring 46 is selected to allow a predetermined lift of the valve plate 42 due to the pressure exerted by the flow, and the extent of this lift is depicted in broken lines in Figure 1.

The conduit section 10 also contains a second check valve 50 which has a valve stem 52 in line with the inclined valve stem 32 of the first check valve 40. The upper end of the valve stem 52 is removably located in a hollow neck 54 extending from the inside of the cover plate 20 of the conduit 10. The lower end of the valve stem 32 is secured to a perpendicularly disposed valve plate 56, the lower edge of which has a resilient insert 58 which seals with the valve seat 60 due to the action of a spring 62 bearing against a neck 64 and valve plate 56. The seat 60 is provided in the removable sleeve 36 in the same manner as seat 40, but seat 60 is larger in diameter than seat 40, as illustrated in Figure 1.

Due to the positioning of portions of valve seats 40, 60 between the inlet 12 and outlet 14, the inclination of the valve stems 32, 52 to the longitudinal axis of the conduit section 10, and the lift of valve plate 42, the flow through the check valves 30 and 50 is substantially in a straight line, as indicated by the arrows.

The check valve assembly is serviced by removing the cover plate 20, and then withdrawing the check valves 30 and 50, together with sleeve 36.

In the embodiment shown in Figure 2, the lowermost level of the valve seat 60' is below the lowermost level of the valve seat 40', and hence well below the lowermost level of the lift of the valve plate 42'. To provide for the preferred lift of the latter, the second valve plate 56' may be domed as illustrated so as to have a depending annular wall 57' engaging the valve seat 60'.

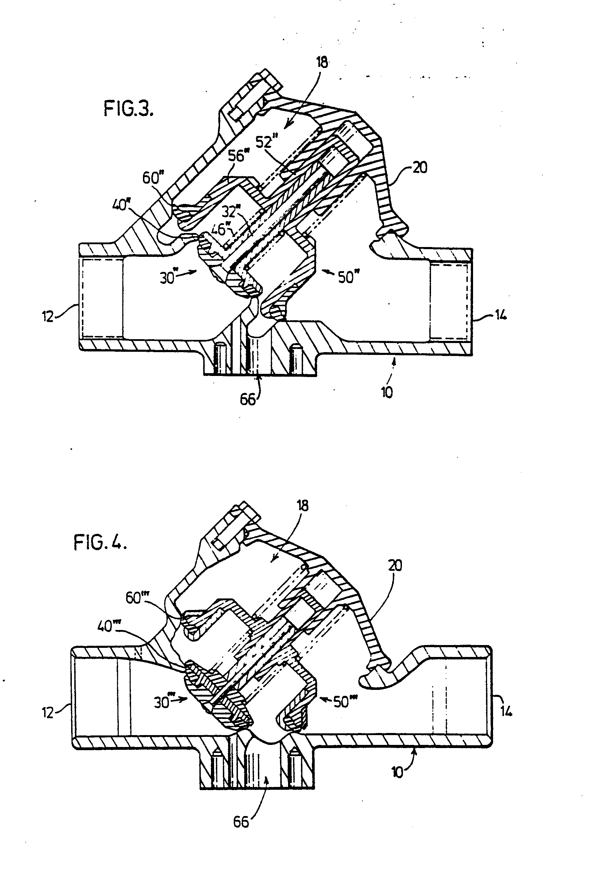

In the embodiment shown in Figure 3, the valve stem 32" of the first check valve 30" is slidably located in the valve stem 52" of the second check valve 50". Also the upper end of the first check valve spring 46" bears against the underside of the second check valve plate 56" which is domed to provide the necessary space for the spring. In this embodiment (as also in the embodiment shown in Figure 2), the first check valve seat 40" and the second check valve seat 60" are in substantially the same plane.

In the embodiment shown in Figure 4, the lowermost level of the first check valve seat 40"' and of the second check valve seat 60"' are located in the same plane parallel to the direction of flow.

Each embodiment has a vent 66 which enables the assembly to operate as a back flow preventer in the event that the second check valve does not close soon enough or completely on reversal of flow. However, without the vent 66, and if the flow ceases or there is a reversal of pressure in the conduit section 10, both first and second check valves would close tightly to prevent contamination. Also, as a further protection, they operate independently so that if one of them ceases to function properly the other will check the reverse flow.

Where the valve assembly is arranged as in Figure 3, it will be appreciated that, on removal of the cover plate 20, both first and second check valve plates and stems can be removed without provision of a removable sleeve 36. However, the latter has particular utility because it enables the check valve structure to be inserted or removed as a unit for the purpose of servicing.

Other embodiments within the scope of the invention will be apparent to a person skilled in the art, the scope of the invention being defined in the appended claims.

0002600

CLAIMS

1.      A check valve assembly including a conduit section having an inlet and an outlet on a longitudinal axis thereof, and first and second check valves in said conduit section, said check valves respectively having first and second valve stems, first and second valve seats, and cooperating valve plates mounted on the valve stems, the first check valve being upstream of said second check valve, and the second valve seat having a larger diameter than the first valve seat, characterized in that the first and second valve stems (32, 52) are movable along a common axis inclined to the longitudinal axis of the conduit section (10), the first and second valve seats (40, 60) have portions located between the inlet (12) and the outlet (14), the first valve plate (42) having a lift sufficient to enable fluid flowing from the inlet (12) to the outlet (14), when the valves are open, to flow past the portions of the valve seats (40, 60) in a substantially straight line from the inlet (12) to the outlet (14), and the conduit section (10) having removable means (20) for securing the check valves in position.

2.      A check valve assembly according to claim 1 characterized in that the second valve plate (50) has a depending annular wall (57) engageable with the second valve plate (60), and the first valve plate (42) is positioned to move to an open position within the area bounded by the annular wall (57).

3.      A check valve assembly according to claim 1 or claim 2 characterized in that the first valve stem (32) is slidably mounted in the second valve plate (56).

4.      A check valve assembly according to claim 1, claim 2, or claim 3 characterized in that the first and second valve seats (40, 60) lie in first and second planes respectively, and the second valve seat (60) lies in a plane downstream of the first valve seat (40).

5.      A check valve assembly according to any one of claims 1 to 4 characterized in that the first and second valve seats (40, 60) are located on a removable sleeve (36) in the conduit section (10).

0002600

1/2

FIG.1.

FIG.2.

FIG.3.

FIG.4.

European Patent Office

**EUROPEAN SEARCH REPORT**

| | DOCUMENTS CONSIDERED TO BE RELEVANT | | CLASSIFICATION OF THE APPLICATION (Int Cl ²) |
|---|---|---|---|
| Category | Citation of document with indication, where appropriate, of relevant passages | Relevant to claim | |
| A | US - A - 1 940 452 (GLAB)  * Page 1, line 71 - page 3, line 16 * | 1 | E 03 C  1/10 F 16 K  15/06 |
| A | US - A - 2 202 211 (KLING)  * Page 1, line 71 - page 2, line 32 * | 1 | |
| A | DE - A - 2 450 465  * Figure 5 * | 1 | TECHNICAL FIELDS SEARCHED (Int Cl ²) E 03 C F 16 K |

CATEGORY OF CITED DOCUMENTS

X particularly relevant

A technological background

O non-written disclosure

P intermediate document

T theory or principle underlying the invention

E conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 15-03-1979 | VERELST |

EPO Form 1503.1  06.78